# EUROPEAN PATENT APPLICATION

(11) **EP 4 477 370 A1**
(43) Date of publication of application: **18.12.2024**
(21) Application number: 23425034.8
(22) Date of filing: 16.06.2023
(51) Int. Cl.: B26D 1/02, B26D 1/12, B26D 1/143, B26D 3/26, B26D 3/30, B26D 7/06, B26D 9/00, A23N 3/04

(54) **SYSTEMS AND METHODS FOR PROCESSING FRUIT AND VEGETABLES**

(71) Applicant: ABL S.p.A., 41032 Cavezzo (MO) (IT)
(72) Inventor: Ascari, Carlo, 41032 CAVEZZO (MO) (IT); Fabbri, Matteo, 41032 CAVEZZO (MO) (IT); Sgarbi, Giuliano, 41032 CAVEZZO (MO) (IT)
(74) Representative: Holzwarth-Rochford, Andreas

(57) **Abstract**

Systems and methods are provided for slicing and aligning a produce item. An example system includes a grabbing mechanism configured to secure a produce item by contacting a middle section of the produce item in a manner that a top section and a bottom section of the produce item remain exposed when secured by the grabbing mechanism. The example system also includes a first rotating blade configured to remove the top section of the produce item while the produce item is secured by the grabbing mechanism, and a second rotating blade configured to remove the bottom section of the produce item while the produce item is secured by the grabbing mechanism.

## Description

### BACKGROUND

Items of produce, such as fruits and vegetables, often grow in configurations that substantially differ from how they are stored, transported, sold, or consumed. For example, in some instances it may be desirable to slice produce *(e.g.,* lemons, limes, apples, oranges, tomatoes) into halves, quarters, or smaller sections during a produce processing phase. These smaller sections, or "slices," of the fruit can then be provided to consumers for use and consumption. For instance, a consumer (e.g. grocery shopper) or food-provider (e.g. restaurant) may prefer to purchase prepackaged, pre-sliced produce, rather than purchase produce in a more raw form to cut themselves. In many instances, it is also important to limit contamination of the sliced produce during preparation, particularly for interior portions of the produce to be consumed.

### SUMMARY

Systems and methods are provided for cutting produce (e.g. lemons, limes, tomatoes) and then preparing the produce to be packaged. In many situations it may be desirable to provide individual sliced and uniformly packaged produce items. However, given the unique shape and size of each natural grown item of produce, and given that it is often important to avoid contaminating internal sections (e.g. the internal fruit excluding the external skin), processing produce items for individual sliced packaging can present several challenges. In some aspects, the present disclosure allows for the top and bottom sections of a produce item to be quickly removed, thereby allowing for a uniform packaging height. Additionally, techniques for slicing and presenting sliced produce items to a packaging picker in a manner that the external skin of the produce item is substantially exposed to an apparatus (e.g., a picker) are also provided. Accordingly, the present disclosure can allow for the processing and sale of individual produce items (e.g. lemon slices) at scale.

In one aspect, the present disclosure provides a system for processing produce. The system may include a grabbing mechanism configured to secure a produce item by contacting a middle section of the produce item, wherein a top section and a bottom section of the produce item remain exposed when secured by the grabbing mechanism, a first rotating blade configured to remove the top section of the produce item while the produce item is secured by the grabbing mechanism, and a second rotating blade configured to remove the bottom section of the produce item while the produce item is secured by the grabbing mechanism.

In another aspect, the present disclosure provides a system for processing produce. The system may include a conveyor belt having a transport section, the conveyor belt configured to convey a sliced produce item along at least part of the transport section, wherein the transport section of the conveyor belt includes an angled portion having an angle configured to present an exterior portion of the sliced produce item in a substantially horizontal direction.

In yet another aspect, the present disclosure provides a method for processing produce. The method may include securing a produce item using a grabbing mechanism, removing a top section and a bottom section of the produce item using at least one rotating blade, pressing the produce item against a wedge assembly in order to slice the produce item into two halves, the wedge assembly having a stationary blade and a wedge with at least one curved side, wherein the curved side is configured so that the interior side of one of the halved produce items will slide from a vertical position down the curved side into a horizontal position, slicing the halved produce item in half using a rotating blade to produce a quartered produce item, transporting the quartered produce item along a conveyor belt having an angled portion, wherein the angled portion has an angle configured to present an exterior portion of the quartered produce item in a substantially horizontal direction, and removing the quartered produce item from the conveyor belt by contacting only the exterior portion of the quartered produce item.

### BRIEF DESCRIPTION OF DRAWINGS

FIG. 1A is a diagram depicting a front, isometric view of a system for processing produce.
FIG. 1B is a diagram depicting a back, isometric view of the system for processing produce of FIG. 1A.
FIG. 1C is a diagram depicting an isometric, sectional view of the system for processing produce of FIGs. 1A-1B.
FIG. 1D is a diagram depicting an isometric, sectional view of the system for processing produce ofFIGs. 1A-1C.
FIG. 2 is a diagram depicting a detailed view of various slicing mechanisms of the system for processing produce of FIGs. 1A-1D.
FIG. 3A is a diagram depicting various subcomponents of a slicing mechanism of a system for processing produce, the slicing mechanism including two rotating blades and a grabbing mechanism. The grabbing mechanism is shown extending an unsliced produce item in the direction of the rotating blades.
FIG. 3B is a diagram depicting the various subcomponents of the slicing mechanism in FIG. 3B, the grabbing mechanism is shown retracting the produce item away from the direction of the rotating blades with the top and bottom sections of the produce item having been removed.
FIG. 4A is a diagram depicting a side view of a grabbing mechanism of a system for processing produce.
FIG. 4B is a diagram depicting a top view of the grabbing mechanism of FIG. 4A.
FIG. 5A is a diagram depicting various subcomponents of a slicing mechanism of a system for processing produce, including a press and a wedge assembly. A produce item is shown positioned between the press and a stationary blade of the wedge assembly.
FIG. 5B is a diagram depicting the various subcomponents of the slicing mechanism of the system for processing produce of FIG. 5A. The press is shown having pressed down on the produce item, which has been split into two halves by the stationary blade of the wedge assembly.
FIG. 6A is a diagram depicting various subcomponents of a slicing mechanism of a system for processing produce, the subcomponents including a wedge, a platform, a horizontal press, a vertical rotating blade, and two conveyor belts. As shown, a halved produce item may slide down a curved wall of the wedge and come to rest on the platform.
FIG. 6B is a diagram depicting the slicing mechanism subcomponents of FIG. 6A. The platform is shown having rotated the produce item by 90 degrees so that a cut section of the produce item is orthogonal to the vertical rotating blade.
FIG. 6C is a diagram depicting the slicing mechanism subcomponents of FIGs. 6A-6B. The horizontal press is shown having pushed the halved produce item onto the conveyor belts and the halved produce item is shown having been cut in half again by the vertical rotating blade.
FIG. 7 is a diagram depicting two quartered produce items being transported along two conveyor belts with a vertical saw positioned between the two conveyor belts.
FIG. 8 is a diagram depicting a front view of a produce item being transported along an angled portion of a conveyor belt above a shaping element.
FIG. 9 is a diagram depicting a front view of a produce item being transported along an angled portion of a conveyor belt above a shaping element. A support surface is positioned adjacent to the conveyor belt.
FIG. 10 is a diagram depicting a front view of two produce items being transported along an angled portion of a conveyor belt above a shaping element configured to extend and retract vertically.
FIG. 11A is a diagram depicting a front view of a produce item being transported along an angled portion of a conveyor belt. Viewed from the top, the exterior portion would not completely cover the interior portion of the produce item.
FIG. 11B is a diagram depicting a front view of a produce item being transported along an angled portion of a conveyor belt. Unlike in FIG. 10A, an interior portion of the sliced produce item is completely underneath the exterior portion of the sliced produce item.
FIG. 12 is a diagram depicting a sliced produce item product contained within packaging.
FIG. 13 is a process flowchart illustrating a method of processing produce.

### DETAILED DESCRIPTION

System and methods as described herein provide processing techniques that may allow for the swift resizing of a produce items by removing a top and a bottom section of the produce item. Additionally, among numerous other advantages, the techniques described herein allow for various additional produce processing, including cutting produce into slices and properly presenting those slices to a picker in a manner that the exterior of the produce item may be exposed to the picker instead of internal sections intended for consumption. Although many of the examples described herein are specifically tailored to fruits, and more specifically to citrus fruits (e.g. lemons, limes, oranges) that have a specific shape and internal construction, it should be appreciated that many of the techniques described herein can be readily applied to other kinds of produce that would benefit from slicing, including but not limited to, tomatoes, watermelons, and apples.

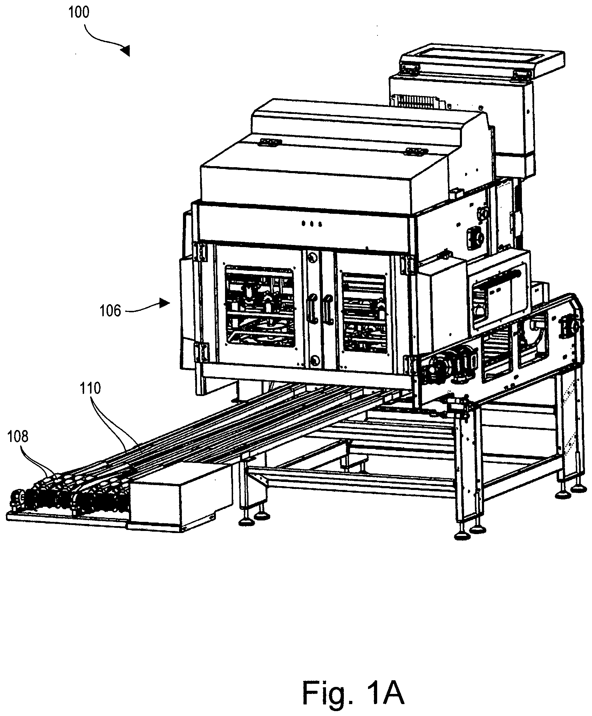

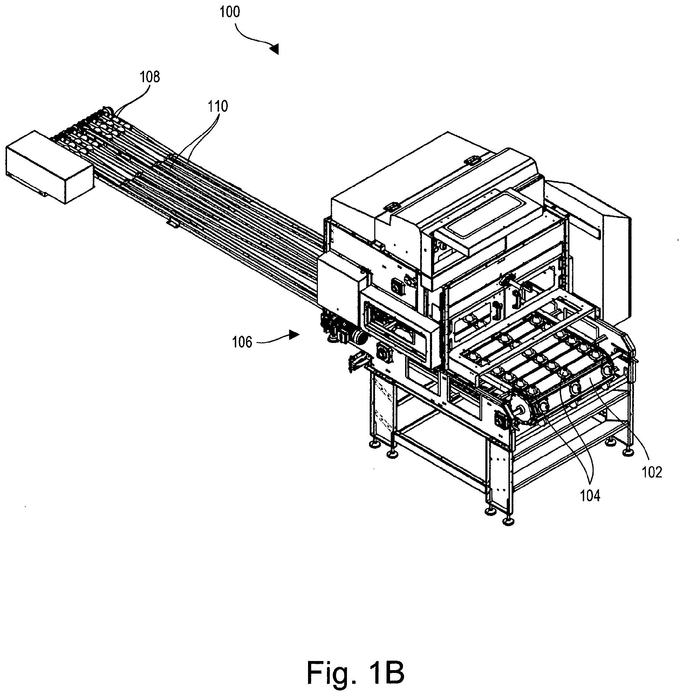

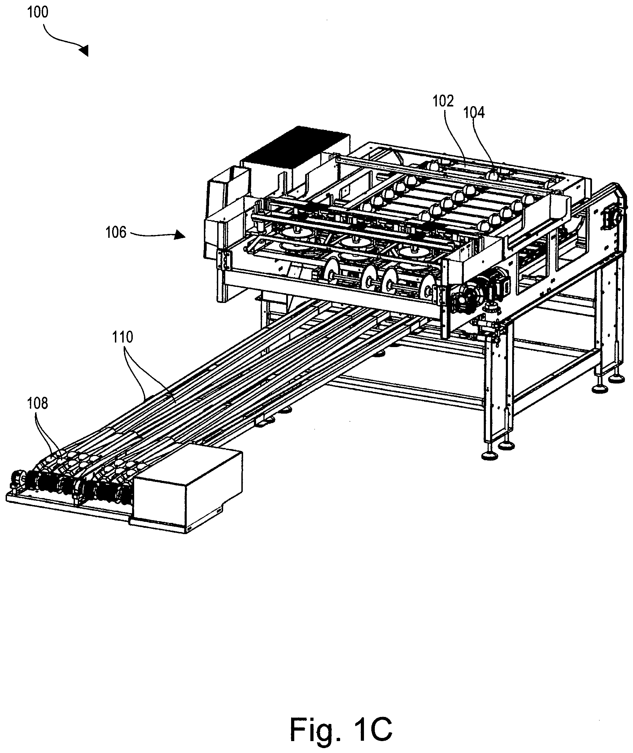

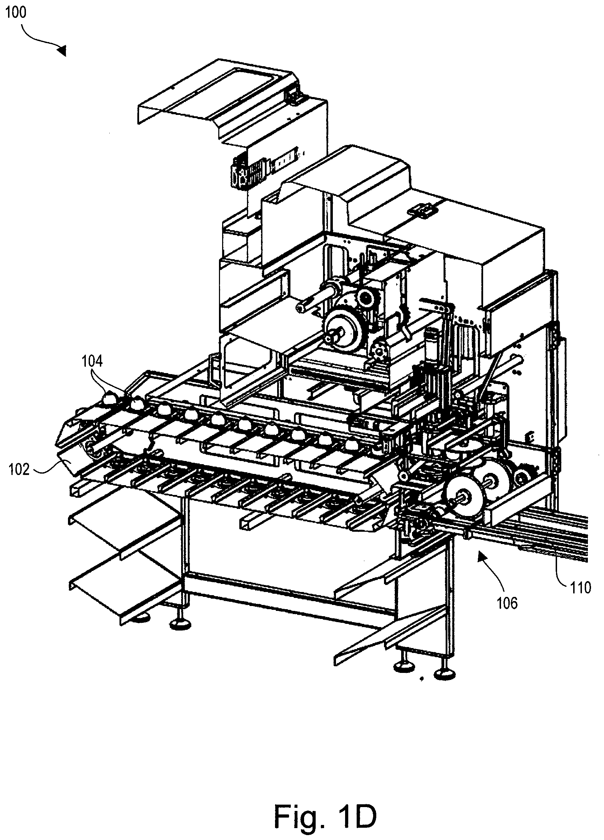

FIGs. 1A-1D depict various views of a system 100 for processing produce. The system 100 includes an input conveyor belt 102 on which unsliced produce items may be loaded. In this example, unprocessed lemons 104 are placed onto the input conveyor belt 102, where they are then transported to the slicing mechanisms 106 of the system 100. After being sliced and processed by the slicing mechanisms 106, the resulting sliced produce items 108 may be transported away from the slicing mechanisms 106 using a number of product conveyor belts 110. As will be further described, the product conveyor belts 110 may present the sliced produce items 108 in a manner that they may be easily grabbed off of the product conveyor belts 110 by contacting the exterior portion of the sliced produce items 108 (in this case, the outer peel surface of the lemons). Once one of the sliced produce items 108 has been selected from the product conveyor belts 110 by a picker, it may then undergo a packaging process, before ultimately being sold and provided to consumers. Accordingly, the system 100 can allow for the rapid processing of a high volume of produce items.

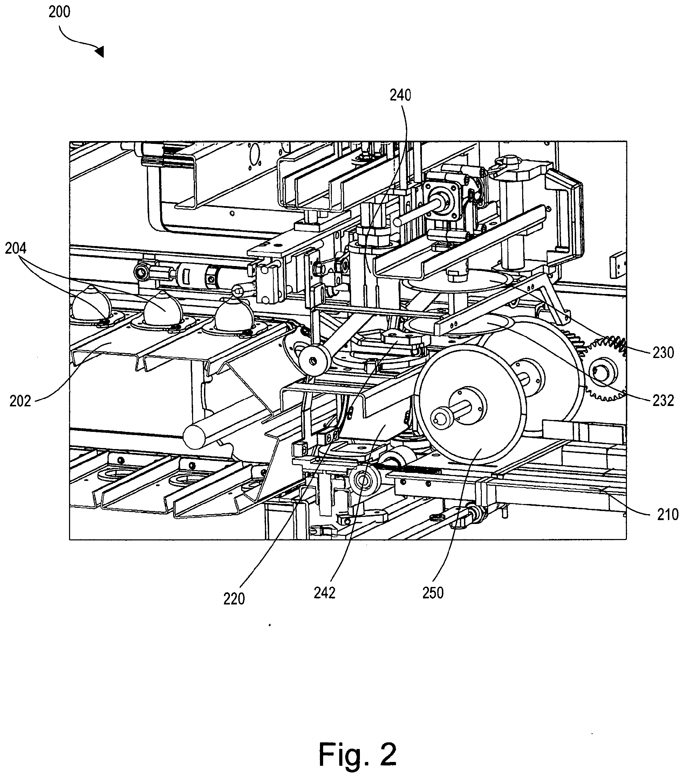

FIG. 2 depicts example slicing mechanisms 200 that may be used in a produce processing system, such as the system depicted in FIGs. 1A-1D. As with the system of FIGs. 1A-1D, produce items 204 may be transported to the slicing mechanism subsystems via an input conveyor belt 202. The system may include a grabbing mechanism 220 configured to secure one of the produce items 204 by contacting a middle section of the produce item 204. The grabbing mechanism may be configured to transport each produce item 204 towards a pair of rotating blades 230, 232. The top rotating blade 230 may be configured to remove the top section of the produce item 204 while the produce item is secured by the grabbing mechanism 220, while the bottom produce item 232 may be configured to remove the bottom section of the produce item 204. Afterward, the grabbing mechanism 220 may reposition the produce item below a press 240. The press 240 may be configured to push the produce item 204 into a stationary blade of a wedge assembly 242, thereby further slicing the produce item 204 in half. Finally, the halved produce items may be transported on output conveyor belts 210, where they may be further sliced by a vertical rotating blade 250 before being transported down the output conveyor belts 210 and presented for selection and packaging.

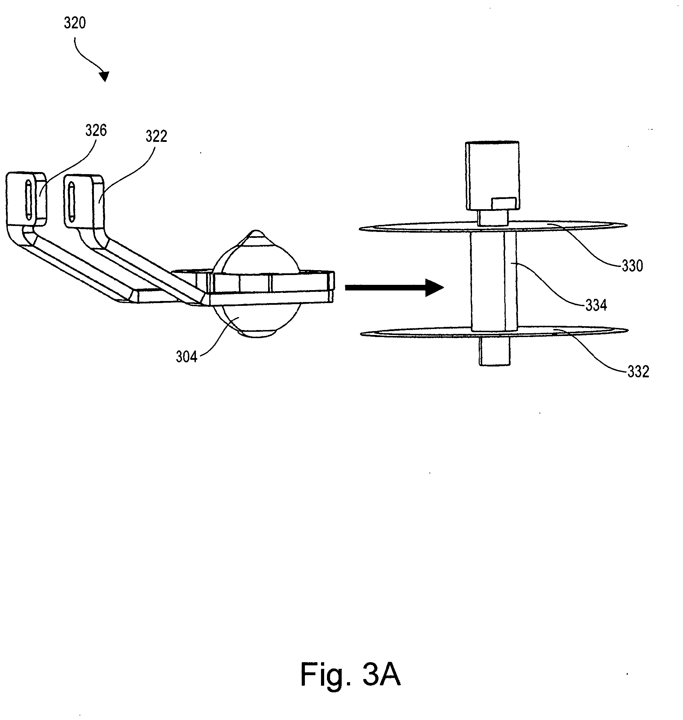

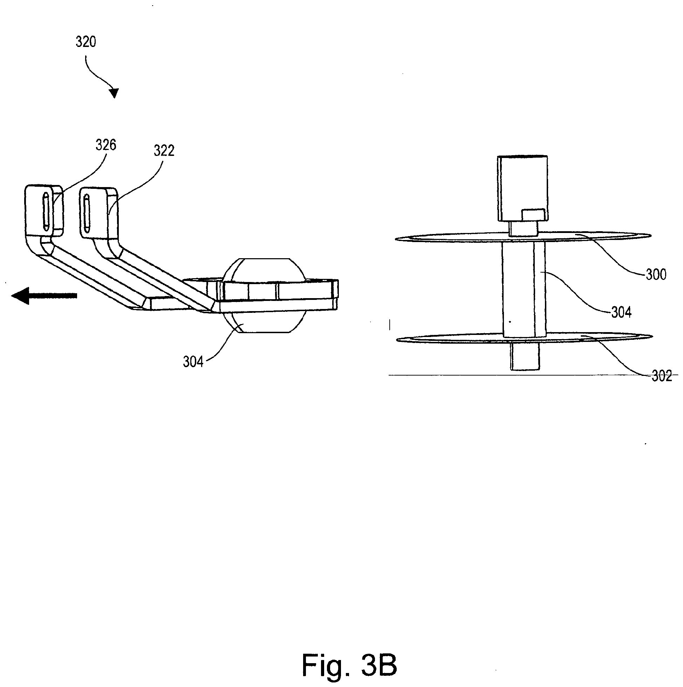

FIGs. 3A-3B depict an example grabbing mechanism 320, formed of a first arm 322 and a second arm 326, pushing a produce item 304 in a lateral direction into a first rotating blade 330 and a second rotating blade 332, and then pulling the produce item 304 away from the pair of rotating blades 330, 332. As shown, both a top and a bottom section of the produce item 304 may be simultaneously cut off by this process. Although the top and bottom section of the produce item 304 may instead be removed sequentially, removing both portions simultaneously can reduce processing times and eliminate system complexity.

Although the top rotating blade 330 and the bottom rotating blade 332 are depicted on the same rotating axis and connected via an axle 334, it should be appreciated that other configurations are possible. For instance, each rotating blade 330, 332 may instead have its own axle and be positioned on separate axes. Likewise, although the rotating blades are shown to have a substantially circular construction, it should be appreciated that alternative rotating blade forms may be used. A non-rotating blade may be alternatively used; for example, the produce item 304 may be simultaneously forced against two non-rotating blades to remove the top and bottom sections.

The top rotating blade 330 and bottom rotating blade 332 may have a fixed distance between them in order to account for size limitations due to standardized packing for individual slices. In other words, because each packaging may be limited to a standard size, but the natural produce items will vary in height, a fixed distance between the two blades 330, 332 may remove more produce material from the tops and bottoms of some produce items than from others, but the resulting product slices may advantageously have a uniform height. This predetermined distance, as well as the diameter of the rotating blades, may be adjusted depending on the type and size of the produce item 304 being processed. Beyond allowing for a uniform packaging height, removal of the top and/or bottom of the produce item 304 may further assist in the processing of the produce item by, for instance, providing a flat surface for a blade to contact and therefore providing a more controlled cut.

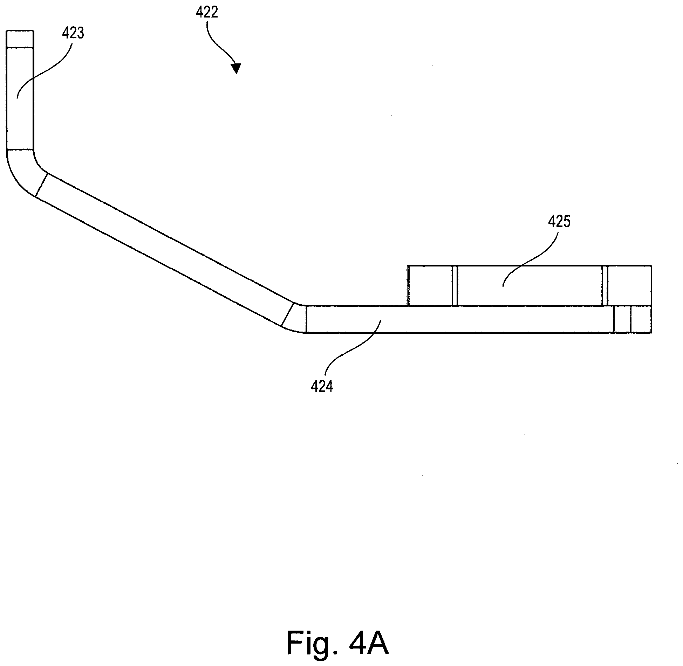

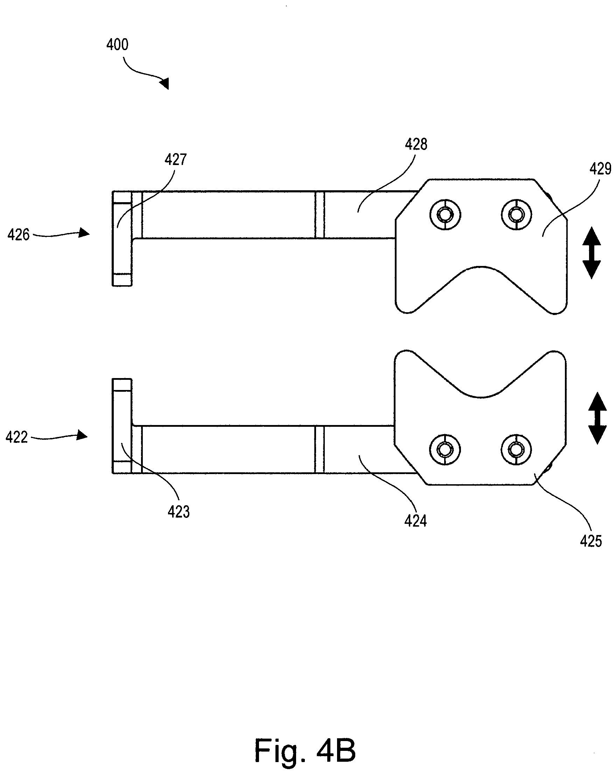

FIGs. 4A-4B depict various views of a grabbing mechanism 420 having a first arm 422 and a second arm 426. The first and second arms 422, 426 may each include connector components 423, 427 configured to attach the grabbing mechanism to another component of a processing system. Each arm 422, 426 may have extended flat body sections 424, 428 and grabbing components 425, 429. The grabbing components 425, 429 may be specifically sized and shaped to contact a produce item in a manner that pressure applied from the grabbing components 425, 429 may be more uniformly distributed to the produce item. For instance, the grabbing components 425, 429 may include a curved contacting surface. At least one of the first arm 422 and the second arm 426 may be configured to move a direction towards and away from the other arm, thereby allowing a produce item located in between to be secured or released.

The extended flat body sections 424, 428 and the grabbing components 425, 429 may have a vertical height that does not exceed the height of a middle section of the produce to be sliced. In this manner, a top section and a bottom section of a produce item may remain exposed when secured by the grabbing mechanism 420. For instance, the vertical height may be less than half of the size of the produce to be sliced, or more specifically less than 5 centimeters. Accordingly, the two arms 422, 426 may be moved in a lateral direction between two stationary rotating blades in order to cut off the top and bottom sections of a produce item without risk of the arms 422, 426 contacting either blade. Although the grabbing mechanism 420 is depicted as two clamping arms in this illustration, it should be appreciated that other forms may be used to secure a produce item while its top and bottom sections are removed. For example, a single arm with a claw-type grabbing component or a suction component may be used. In some forms, the grabbing mechanism 420 may be substantially stationary while the cutting of the produce item occurs, wherein the blades are moved relative to the grabbing mechanism 420.

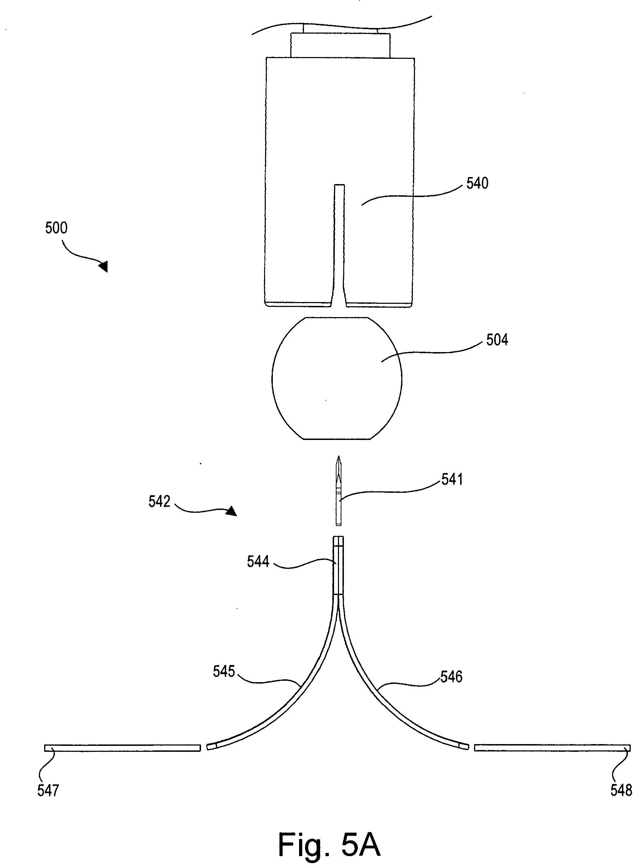

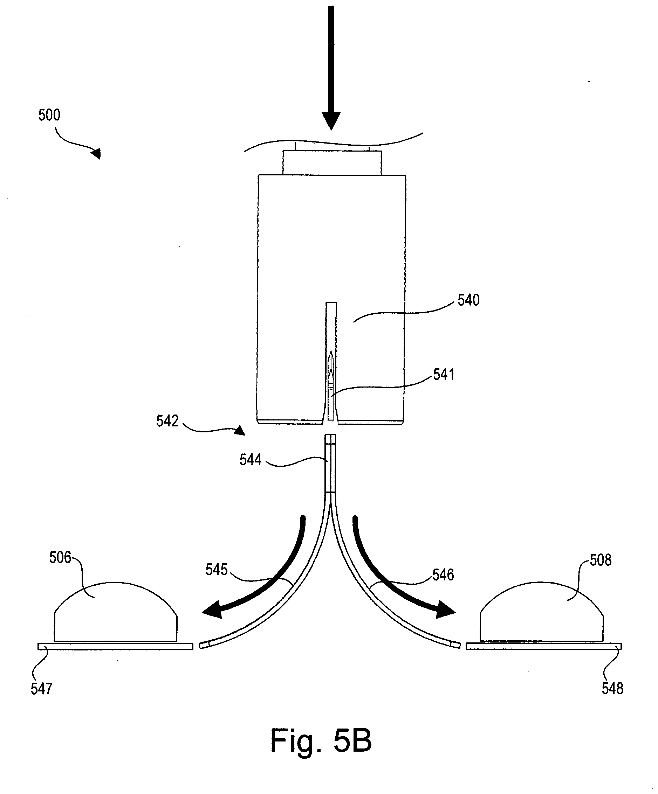

FIGs. 5A-5B depict various slicing components 500 for further processing and cutting of a produce item 504. A press 540 may be configured to apply pressure to the produce item 504 in a direction that forces the produce item against a stationary blade 544 of a wedge assembly 542, thereby slicing the produce item 504 in half. Each half of the produce item 506, 508 may then slide down the curved edges 545, 546 of a wedge 544 onto respective platforms 547, 548 and come to rest in a horizontal position with the interior sections of the produce item halves 506, 508 contacting each platform 506, 508.

The size and curvature of the wedge 544 may be specifically configured to prevent the produce item from rolling in an uncontrolled manner. In other words, each curved side 545, 546 may be configured so that the interior side of one of the halved produce items 506, 508 will slide from a vertical position down the curved side to a horizontal position. For instance, the height of each curved edge may be limited to being larger than the height of the produce item, and the curvature of each curved side 545, 546 may be approximately 90 degrees. The produce item 504 may be positioned between the press 540 and the stationary blade 541 of the wedge assembly 542 by a grabbing mechanism (not depicted). Although the illustrated wedge assembly is configured to split the produce item in half, it should be appreciated that the wedge may be instead configured to further split the produce item (e.g. into quarters) provided that the resulting sliced sections can be controllably transferred onto respective platforms for further processing and transport. Furthermore, although the stationary blade 541 is depicted as a separate detached component, the stationary blade 541 could be alternatively integrated into the top edge of the wedge 544. In other words, in some examples, the wedge assembly 542 may include only a single wedge with an integrated top blade.

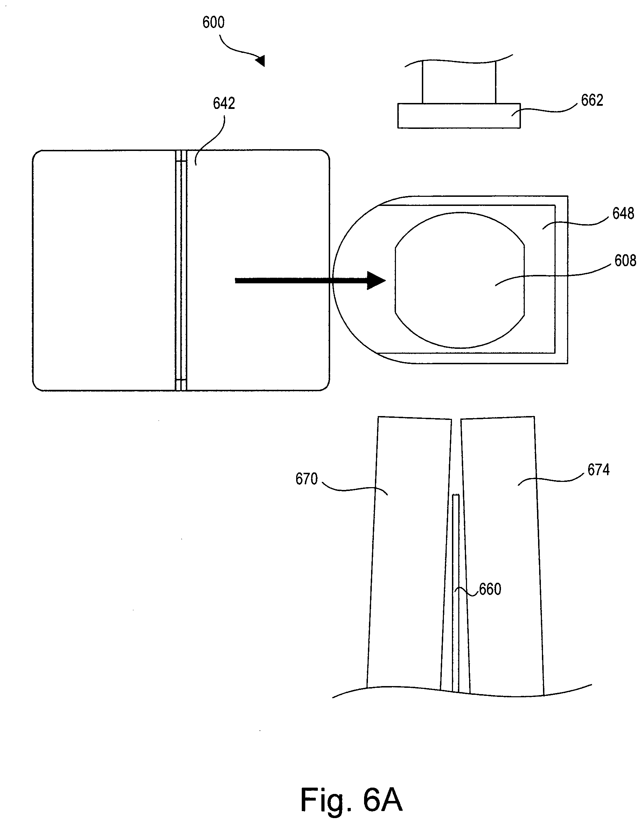

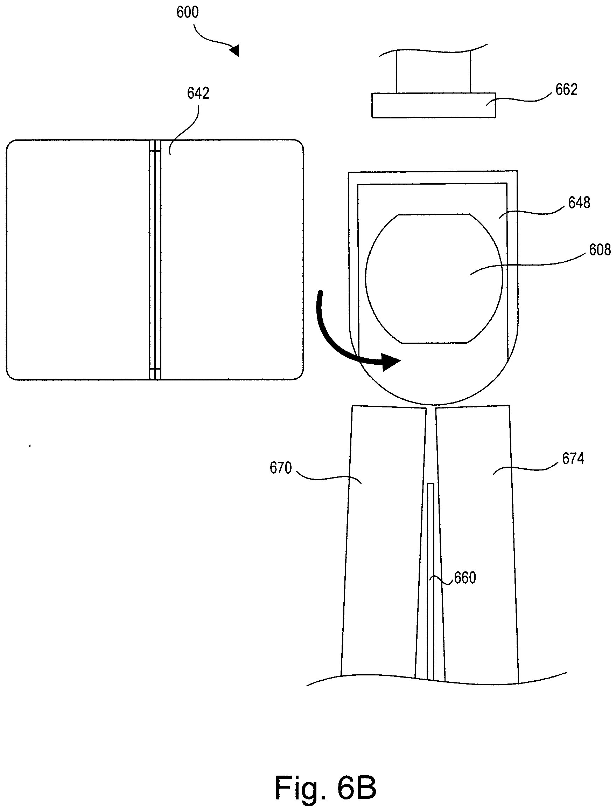

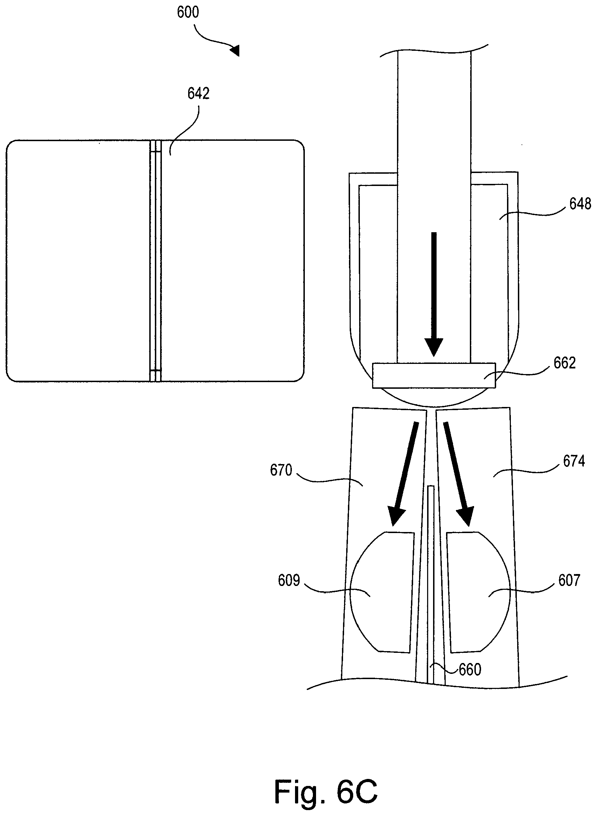

FIGs. 6A-6C depict various slicing components 600 for additional processing and cutting of a produce item 604. Specifically, after being halved by a wedge assembly 642, a halved produce item 608 may slide onto a horizontal platform 648, as shown in FIG. 6A. Next, the horizontal platform 648 may be configured to rotate so that a top section of the produce item 608 is perpendicular with a vertical rotation blade 660, as shown in FIG. 6B. Finally, a horizontal press 662 may extend to push the halved produce item 608 onto two conveyor belts 670, 674, where the halved produce item 608 is further sliced into quarter slices 607, 609 by the vertical rotating blade 660. The quartered produce items 607, 609 may then be transported down the conveyor belts 670, 674.

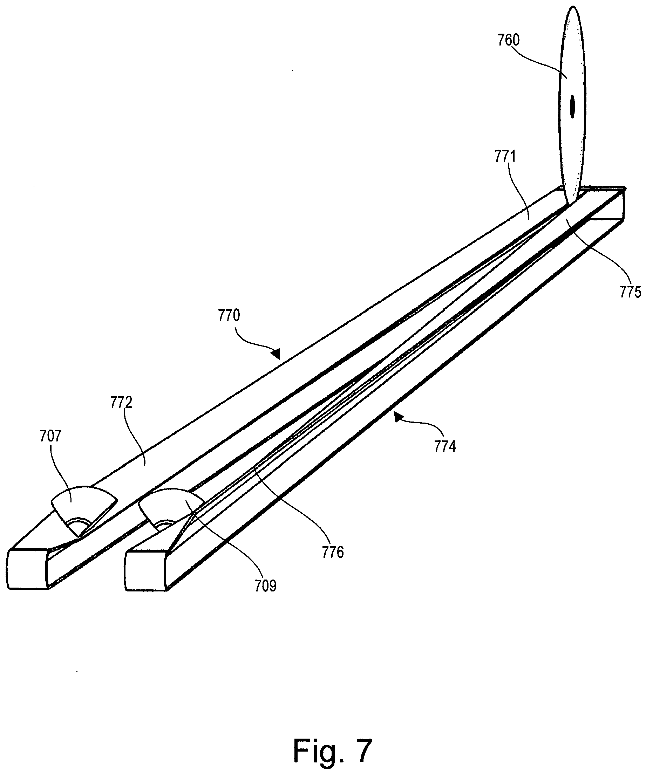

FIG. 7 depicts a first conveyor belt 770 and a second conveyor belt 774 each having a top surface transport section 771, 775 configured to convey sliced produce items 707, 709. For clarity purposes, supporting components (e.g. conveyor belt pulleys) have not been depicted. As shown, each conveyor belt 770, 774 may have an angled portion 772, 776 having an angle configured to present exterior portions of the sliced produce items 707, 709 in a substantially horizontal direction. Presenting each sliced produce item in this manner may have numerous benefits. For instance, providing the exterior portions of the sliced produce items 707, 709 in a horizontal direction may allow for a picker to grab each sliced produce item (e.g. using a suction mechanism) without contacting the interior portion of each produce item, thereby avoiding unnecessary contamination of the items and providing a more uniform grabbing surface. Furthermore, a downward facing scanner may better locate and position a picker arm if presented with only an exterior portion of the produce item, which can often have different optical properties (e.g. color) from an interior section of the produce item.

As also shown in FIG. 7, a vertical rotating blade 760 may be positioned between the first and second conveyor belts 770, 774 in a manner that a halved produce item may be further sliced and the resulting slices 707, 709 may then be separately transported on their respective conveyor belts 770, 774. As shown, the conveyor belts may be angled so that the sliced produce items 707, 709 may gain some spatial separation prior to being presented to a picker. Each conveyor belt 770, 774 may have a portion of the top surface transport section 771, 775, such as an area near the vertical rotating blade 760, that is substantially flat and orthogonal to the direction of gravity. Although each belt may be smooth, in order to ensure that the produce sliced produce items 707, 709 are properly transported down the conveyor belts 770, 774, each belt may have a textured surface and/or a plurality of belt flights (e.g. vertical blocks) prevent sliding or sticking of the produce items. The belt flights may be spaced at appropriate lengths along the conveyor belt so that each belt flight is configured to contact a single sliced produce item being transported along the transport section 771. Furthermore, the conveyor belts 770, 774 may have walls or guiding elements to keep the produce items from falling off.

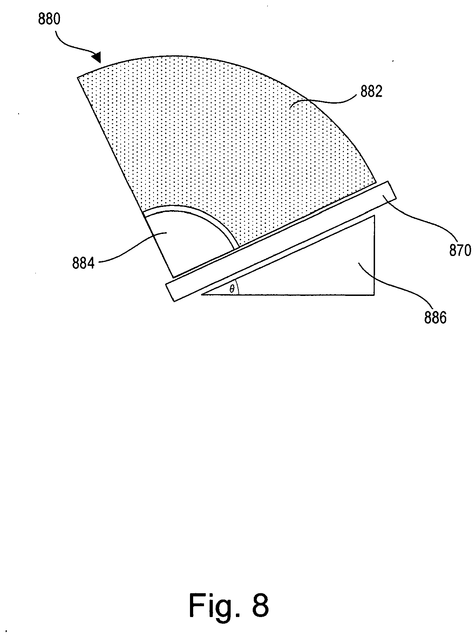

FIG. 8 depicts a front view of a sliced produce item 880 having an exterior portion (e.g. shell, skin, peel) 882 and an interior portion (e.g. pulp) 884 being transported along an angled portion 870 of a conveyor belt above a shaping element 886. The shaping element 886 may help to maintain the angled portion 870 at a desired angle, *θ*, at which the sliced produce item 880 may be removed from the conveyor belt. As shown, the shaping element 886 may contact a bottom surface of the angled portion 870 of the conveyor belt. The shaping element may be formed of any suitable material, and may have a top surface that provides the desired angle, *θ*. Instead of using the shaping element 886, at least one of the end pulleys of the conveyor belt may instead be angled relative to the direction of gravitational pull, thereby producing the desired angle, *θ*, for the angled portion 870.

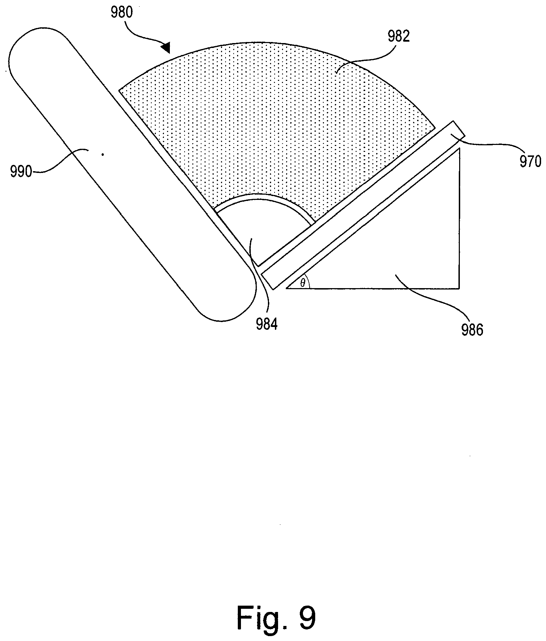

FIG. 9 depicts a front view of a sliced produce item 980, having an exterior portion 982 and an interior portion (e.g. pulp) 984, being transported along an angled portion 970 of a conveyor belt above a shaping element 986 and also along a support surface 990. As shown, the support surface 990 may be positioned adjacent to the angled portion 970 of the conveyor belt and configured to contact an interior surface of the sliced produce item 980, while the angled portion 970 is configured to contact a second interior surface of the sliced produce item 980. By placing the support surface 990 next to the angled portion 970 in this manner, the sliced produce item 980 may be prevented from falling off of the conveyor belt. The support surface may also help maintain the desired angle, *θ*, of the sliced produce item 980 when being presented to a picker.

As used herein, presenting an exterior portion of a sliced produce item in a substantially horizontal direction may specifically be defined to include providing the sliced produce item on a surface that is not substantially orthogonal to the directional pull of gravity. For instance, the angled surface of a conveyor belt on which a sliced produce item is presented may have a positive, non-zero angle, *θ*. In this manner, an exterior portion (e.g. peel side) of the sliced produce item may be tilted in a horizontal direction to be more accessible from above than it otherwise would be if the sliced produce item was on a flat non-angled surface. When the exterior portion of the sliced produce item is in a substantially horizontal direction, the interior sides of the sliced produce item may form a point that faces, at least partially, in a downward direction. More specifically, the angle at which the produce item is presented may be at least 20 degrees, at least 30 degrees, at least 35 degrees, at least 40 degrees, or at least 45 degrees. For a quartered produce item, the angle, *θ*, may specifically be about 45 degrees in order to provide the maximum surface area of the exterior portion for a picker grabbing the quartered produce item from above. The desired angle, *θ*, may depend on the slice angle of the produce item. For instance, if the produce item has a slice angle that is smaller than 90 degrees (i.e. thinner than a quartered item), then the angle, *θ*, of the angled portion of the conveyor belt may need to be larger. Specifically, presenting an exterior portion of a sliced produce item in a substantially horizontal direction may require that the angled portion of the conveyor belt have an angle configured to present the exterior portion so that an interior portion of the sliced produce item is completely underneath the exterior portion.

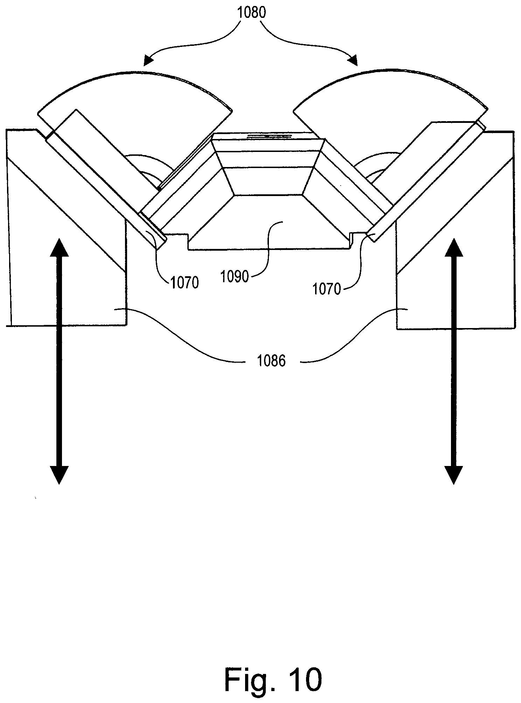

FIG. 10 depicts a front view of two produce items 1080 being transported along an angled portion 1070 of conveyor belts above shaping elements 1086. The two produce items are supported by a support member 1090 having multiple angled surfaces configured to contact each of the produce items 1080. As shown by the arrows, the shaping elements 1086 may be configured to extend and retract in a vertical direction, which allows the shaping elements 1086 to selectively contact the angled portion 1070 of the conveyor belts. When the shaping elements 1086 are not contacting the conveyor belts, the conveyor belts may remain in a flat, horizontal position. The shaping elements 1086 may be configured to move to contact the angled portions 1070 of the conveyor belts only when the conveyor belts are in a stationary state (i.e. when the conveyor belt is not actively moving the sliced produce items 1080). An example workflow may therefore include: transporting the sliced produce items 1080 down the conveyor belt to the angled portions 1070, contacting the conveyor belt with the shaping elements 1086 to produce the desired angle, *θ*, removing the sliced produce items 1080 from the conveyor belts, disengaging and retracting the shaping elements 1086, and then transporting additional sliced produce items down the conveyor belts to the angled portions 1070. Accordingly, by selectively applying the shaping elements 1086 in this manner, the conveyor belt may be operated while in a flat, horizontal position, which can help to prevent stress on the conveyor belts by belt drive gears and to ensure that the conveyor belt stays properly connected to its drive system.

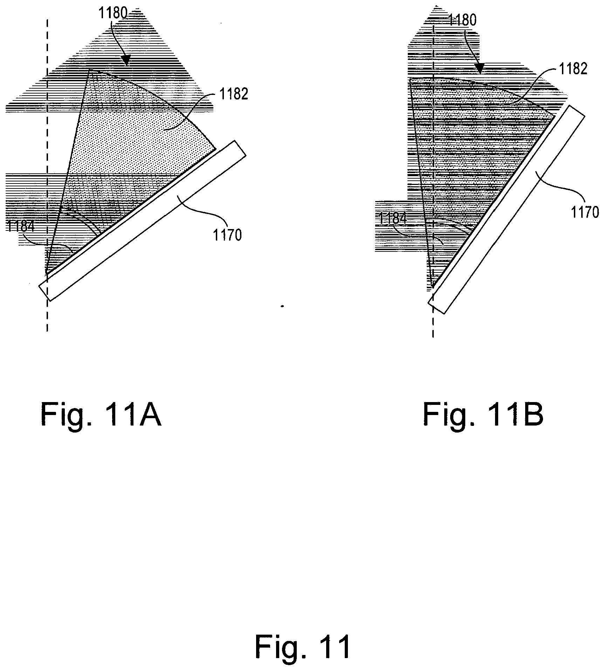

FIGs. 11A-11B depict a sliced produce item 1180 on an angled portion 1170 of a conveyor belt with and without angles configured to present the exterior portion so that an interior portion 1184 of the sliced produce item is completely underneath the exterior portion 1182. Accordingly, FIG. 11B may be more suitable for a picker grabbing the sliced produce item from above, as more of the exterior portion and none of the interior portion of the produce item can be seen from a top-down view.

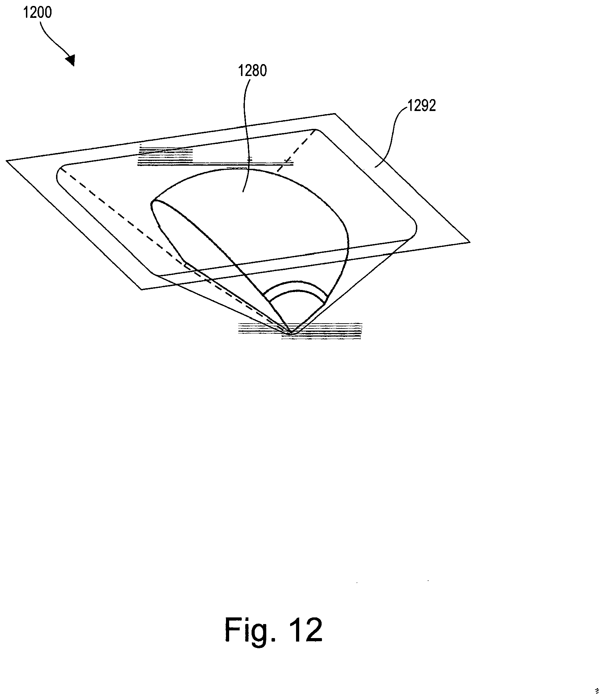

FIG. 12 depicts a produce product 1200 including an individual sliced produce item 1280 contained within packaging 1292. As shown, the packaging 1292 may be specifically sized and shaped to accommodate a single sliced produce item 1280. The sliced produce item 1280 may be placed into the triangular-shaped packaging 1292 in a manner that the exterior portion of the sliced produce item 1280 is presented in a horizontal direction, with two interior sides of the produce item 1180 forming a downward facing point.

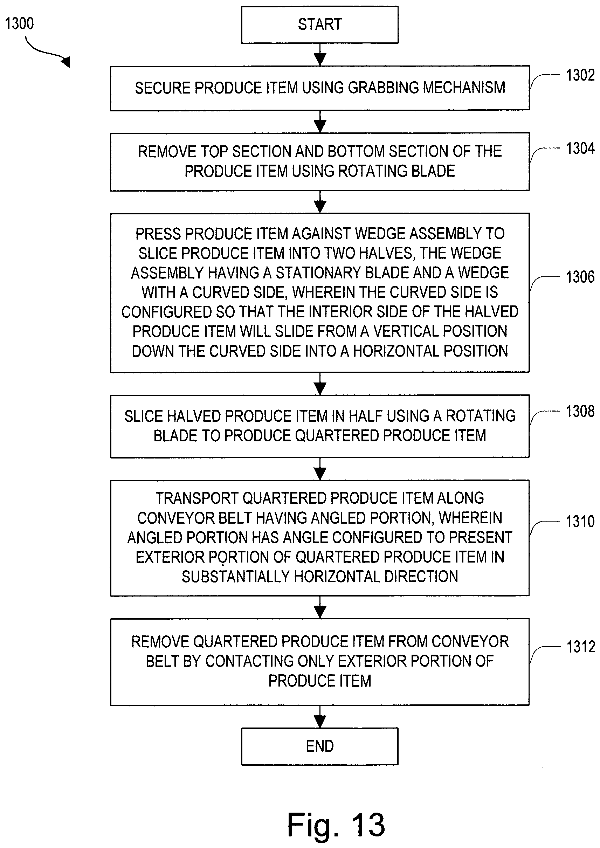

FIG. 13 depicts a flowchart of a method for processing produce. At 1302, a produce item may be secured using a grabbing mechanism. Next, at 1304, a top section and a bottom section of the produce item may be removed using at least one rotating blade. Afterward, at 1306, the produce item may be pressed against a wedge assembly in order to slice the produce item into two halves. The wedge assembly may have a stationary blade and a wedge with at least one curved side, and the curved side may be configured so that the interior side of one of the halved produce items will slide from a vertical position down the curved side into a horizontal position. At 1308, the halved produce item may be sliced in half using a rotating blade to produce a quartered produce item. Next, at 1310, the quartered produce item may be transported along a conveyor belt having an angled portion, wherein the angled portion may have an angle configured to present an exterior portion of the quartered produce item in a substantially horizontal direction. Finally, at 1312, the quartered produce item may be removed from the conveyor belt by contacting only the exterior portion of the quartered produce item.

While the disclosure has been described in detail and with reference to specific embodiments thereof, it will be apparent to one skilled in the art that various changes and modifications can be made therein without departing from the spirit of the embodiments. Thus, it is intended that the present disclosure cover the modifications and variations of this disclosure provided they come within the scope of the appended claims and their equivalents.

## Claims

1. A system for processing produce, comprising:
a grabbing mechanism configured to secure a produce item by contacting a middle section of the produce item, wherein a top section and a bottom section of the produce item remain exposed when secured by the grabbing mechanism;
a first rotating blade configured to remove the top section of the produce item while the produce item is secured by the grabbing mechanism; and
a second rotating blade configured to remove the bottom section of the produce item while the produce item is secured by the grabbing mechanism.

2. The system of claim 1, wherein the first rotating blade and the second rotating blade are configured to simultaneously cut off the top section and the bottom section of the produce item.

3. The system of claims 1 or 2, wherein the first rotating blade and the second rotating blade are centered on the same axis at a predetermined separation height.

4. The system of any one of the preceding claims, wherein the grabbing mechanism is further configured to move the secured produce item in a lateral direction towards the first and second rotating blades.

5. The system of any one of the preceding claims, wherein the grabbing mechanism includes a first arm and a second arm, wherein the first arm is configured to move in a direction towards the second arm.

6. The system of any one of the preceding claims, further comprising:
a wedge assembly having a stationary blade and a wedge with at least one curved side;
and
a press configured to push the produce item into the stationary blade, thereby slicing the produce item into two halves,
wherein the curved side of the wedge is configured so that the interior side of one of the halved produce items will slide from a vertical position down the curved side to a horizontal position.

7. The system of claim 6, wherein the grabbing mechanism is configured to position the produce item between the press and the stationary blade.

8. The system of claim 6 or claim 7, further comprising:
a third blade configured to further slice the halved produce item into at least two sliced produce items.

9. The system of claim 8, further comprising:
a conveyor belt having a transport section, the conveyor belt configured to convey one of the sliced produce items along at least part of the transport section,
wherein the transport section of the conveyor belt includes an angled subsection, the angled subsection having an angle configured to present an exterior portion of the sliced produce item in a substantially horizontal direction.

10. The system of claim 9, further comprising:
a picker configured to remove the sliced produce item from the first rotating belt by contacting only the exterior portion of the sliced produce item.

11. A system for processing produce, comprising:
a conveyor belt having a transport section, the conveyor belt configured to convey a sliced produce item along at least part of the transport section,
wherein the transport section of the conveyor belt includes an angled portion having an angle configured to present an exterior portion of the sliced produce item in a substantially horizontal direction.

12. The system of claim 11, wherein the angled portion of the conveyor belt has an angle configured to present the exterior portion so that an interior portion of the sliced produce item is completely underneath the exterior portion.

13. The system of any one of claims 11 or 12, wherein the angled portion of the conveyor belt has an angle of at least 20 degrees relative to a flat surface orthogonal to the direction of gravity.

14. The system of claim 13, wherein the angled portion of the conveyor belt has an angle of at least 35 degrees relative to a flat surface orthogonal to the direction of gravity.

15. The system of any one of claims 11 to 14, further comprising:
a support surface positioned adjacent to the angled portion of the conveyor belt, wherein the angled portion of the conveyor belt is configured to contact an interior surface of the sliced produce item and the support surface is configured to contact a second interior surface of the sliced produce item.

16. The system of any one of claims 11 to 15, further comprising:
a shaping element contacting the angled portion of the conveyor belt, the shaping element configured to maintain the angle of the angled portion.

17. The system of claim 16, wherein the shaping element is configured to move to contact the angled portion of the conveyor belt only when the conveyor belt is in a stationary state.

18. The system of any one of claims 11 to 17, further comprising:
a second conveyor belt having a second transport section, the second conveyor belt configured to convey a second sliced produce item along at least part of the second transport section, wherein the transport section of the second conveyor belt includes a second angled portion having an angle configured to present an exterior portion of the second sliced produce item in a substantially horizontal direction; and
a rotating blade positioned between the first and the second conveyor belts, wherein the rotating blade is configured to slice a halved produce item being transported on both the first and the second conveyor belts in order to form the sliced produce item and the second sliced produce item.

19. The system of any one of claims 11 to 18, wherein the transport section of the conveyor belt includes a flat portion, the flat portion having a surface that is substantially orthogonal relative to the direction of gravity.

20. The system of any one of claims 11 to 19, wherein the conveyor belt has a plurality of belt flights.

21. A method for processing produce, comprising:
securing a produce item using a grabbing mechanism;
removing a top section and a bottom section of the produce item using at least one rotating blade;
pressing the produce item against a wedge assembly in order to slice the produce item into two halves, the wedge assembly having a stationary blade and a wedge with at least one curved side, wherein the curved side is configured so that the interior side of one of the halved produce items will slide from a vertical position down the curved side into a horizontal position;
slicing the halved produce item in half using a rotating blade to produce a quartered produce item;
transporting the quartered produce item along a conveyor belt having an angled portion, wherein the angled portion has an angle configured to present an exterior portion of the quartered produce item in a substantially horizontal direction; and
removing the quartered produce item from the conveyor belt by contacting only the exterior portion of the quartered produce item.
